# EUROPÄISCHE PATENTSCHRIFT

(11) **EP 0 567 851 B1**
(45) Veröffentlichungstag und Bekanntmachung des Hinweises auf die Patenterteilung: **21.01.1998**
(21) Anmeldenummer: 93106093.3
(22) Anmeldetag: 15.04.1993
(51) Int. Cl.: A01F 29/14, A01D 75/18

(54) **Antriebsvorrichtung für die Einzugswalzen eines Feldhäckslers**
Drive mechanism for the feed rolls of a forage harvester
Dispositif d'entraînement des rouleaux d'amenée d'une récolteuse-hacheuse

(30) Priorität: 30.04.1992 DE 4214204
(43) Veröffentlichungstag der Anmeldung: 03.11.1993
(73) Patentinhaber: CLAAS SAULGAU GMBH, D-88340 Saulgau (DE)
(72) Erfinder: Rauch, Hans, W-7968 Saulgau-Kleintissen (DE); Gebele, Josef, W-7961 Hosskirch 2 (DE)

(56) Entgegenhaltungen:
- DE-A- 1 816 910
- DE-A- 3 034 140
- DE-A- 3 532 000
- DE-A- 3 601 355
- DE-C- 3 129 600
- FR-A- 2 224 070
- FR-A- 2 602 634
- US-A- 4 915 671

## Beschreibung

Die Erfindung bezieht sich auf eine Antriebsvorrichtung für die Einzugswalzen eines Feldhäckslers mit den Merkmalen des Oberbegriffes des Anspruches 1. Eine Antriebsvorrichtung dieser Art ist z. B. durch die DE-PS 35 32 000 bekannt geworden. Wie schon in dieser Patentschrift erwähnt, treten bei einem Schnellstop der Einzugswalzen hohe Kraftspitzen auf, die einerseits vom Antriebsdrehmoment und andererseits von der kinetischen Drehenergie der Einzugswalzen und Ihrer Antriebe herrühren. Es ist auch einerseits bekannt, das Antriebsdrehmoment durch eine Abschaltkupplung vor dem Wirksamwerden des den Schnellstop bewirkenden Klinkengesperres abzukuppeln und andererseits den Aufschlagsstoß der Klinke des Klinkengesperres abzufedern (s. z.B. DE-PS 31 29 600). Die zuletzt genannte Maßnahme reicht aber wegen des kleinen Drehwinkels, den das Klinkengesperre beim Stoppen ausführen kann, noch nicht aus, um die Kraftspitzen in genügender Weise abzubauen.

Mit der Erfindung soll die Aufgabe gelöst werden, die Spitzenkräfte im Klinkengesperre und in den nachfolgenden Antriebselementen in einem stärkeren Maße abzubauen, als das mit den bekannten Maßnahmen möglich war. Zu diesem Zweck werden die kennzeichnenden Merkmale des Anspruchs 1 vorgeschlagen. Im ersten Fall wird das abzubremsende Drehmoment dadurch verkleinert, daß die Drehenergie über einen größeren Drehwinkel abgebaut wird, während im zweiten Fall Drehenergie direkt in Wärmeenergie umgewandelt wird. In vielen Fällen genügt es, wenn nur die oberen Einzugswalzen auf diese Weise abgesichert werden.

Die Konstruktion der Drehstabfedern kann verschiedenartig sein. Es können z. B. metallische Drehstäbe oder Gummihülsen-Federn verwendet werden.

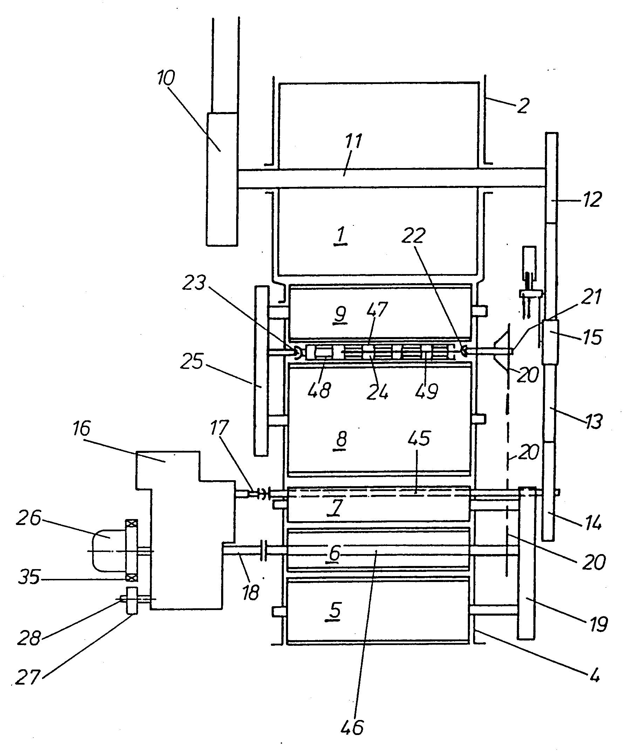

Die Erfindung wird anhand einer Schemazeichnung beispielsweise erläutert. Die Zeichnung zeigt den Trommel- und Einzugskasten eines Feldhäckslers, wobei die Funktionsteile auseinandergezogen gezeichnet sind.

Ein Trommelfeldhäcksler hat eine am Umfang mit Messern bestückte Trommel (1), die in einem Gehäuse (2) drehbar gelagert ist. In einem Einzugsgehäuse (4) sind drei untere Einzugswalzen (5, 6, 7) drehbar gelagert. Oberhalb der unteren Einzugswalzen (5, 6, 7) sind zwei obere Einzugswalzen (8, 9) vorgesehen, die höhenbeweglich sein können.

Die Trommel (1) wird mittels einer Scheibe (10), die mit der Trommelwelle (11) fest verbunden ist, von einem nicht dargestellten Motor angetrieben. Am anderen Ende der Trommelwelle (11) ist ebenfalls eine fest verbundene Scheibe (12) angeordnet, die z. B. mittels Keilriemen (13) in Wirkverbindung mit einer Scheibe (14) steht. Ein Riemenspanner (15) kann willkürlich den Keilriemen (13) lösen oder straffen, so daß die Scheiben (12) und (14) damit entkuppelt oder gekuppelt werden können.

Die Scheibe (14) sitzt fest auf einer Zwischenwelle (45), die am Einzugsgehäuse (4) unterhalb der unteren Einzugswalzen (5, 6, 7) gelagert ist. Auf der anderen Seite des Einzugsgehäuses (4) ist ein nicht näher dargestelltes Wechselgetriebe (16) mit einem Eingangsstummel (17) und einem Ausgangsstummel (18) angeordnet. Dem Ausgangsstummel (18) ist eine Abschaltkupplung (26) vorgeschaltet, die als Reibkupplung ausgebildet ist, die an ihrem Umfang Sperrzähne (35) mit radial gestellten Wirkflächen besitzt. Mit deren Sperrzähnen (35) kann eine Sperrklinke (27) in Wirkverbindung gebracht werden, die auf einer ortsfesten Achse (28) verschwenkbar gelagert ist.

Mit dem Ausgangsstummel (18) ist eine zweite untere Einzugswalze (6) mit einer Welle (46) drehfest verbunden. Von dieser werden über ein Verteilergetriebe (19) die erste und die dritte untere Einzugswalze (5, 7) angetrieben. Außerdem wird über einen Kettentrieb (20) eine im Einzugsgehäuse (4) ortsfest gelagerte Welle (21) angetrieben, die über Kreuzgelenke (22, 23) und eine Schiebewelle (24) auf ein mit den oberen Einzugswalzen (8, 9) verbundenes Verteilergetriebe (25) wirkt. Die Schiebewelle (24) besteht im wesentlichen aus einem Außenrohr (47) mit einer Anzahl von Gummihülsenfedern (48), die von einer mit dem Kreuzgelenk (22) verbundenen, profilierten Schiebewelle (49) durchsetzt werden und mit dieser drehfest verbunden sind.

Zum Betrieb des Feldhäckslers werden die Einzugswalzen (5, 6, 7, 8, 9) durch Verspannen des Riemenspanners (15) angetrieben. Sie fördern den Erntegutstrang in Richtung auf die Häckseltrommel (1). Die an dem Wechselgetriebe (16) angeflanschte Abschaltkupplung (26) ist drehfest verspannt, die Sperrklinke (27) ist außer Eingriff.

Beim Eintritt eines eisenhaltigen Fremdkörpers in die Maschine wird dieser durch einen nicht dargestellten Detektor erkannt. Nach gehöriger Verstärkung des Signales wird der Riemenspanner (15) elektromagnetisch gelöst, wodurch der ganze Antriebsstrang für die Einzugswalzen (5, 6, 7, 8, 9) mit einiger Verzögerung zum Stillstand kommt. Gleichzeitig wird, ebenfalls elektromagnetisch, die Sperrklinke (27) in Wirkstellung mit den Sperrzähnen (35) der Abschaltkupplung (26) gebracht. Dabei wird die Abschaltkupplung (26) in bekannter Weise gelöst, und kommt sofort zum Stillstand.

Die kinetische Drehenergie der unteren Einzugswalzen (5, 6, 7) wird dabei von dem Klinkengesperre (27, 35) aufgenommen. Die kinetische Drehenergie der schwereren oberen Einzugswalzen (8, 9) verdreht zunächst die drehelastische Schiebewelle (24) um einen nennenswerten Winkel, wodurch Spannungsspitzen in den Antriebsorganen (24, 22, 21, 20, 46, 18, 16) und letztendlich in der Abschaltkupplung (26) abgebaut werden.

Um noch einen größeren Anteil der kinetischen Drehenergie abzubauen, kann es zweckmäßig sein, auch die Welle (46), die die zweite untere Einzugswalze (6) durchsetzt, als Drehstabfeder oder mit einer Rutschkupplung versehen, auszubilden.

## Patentansprüche

1. Antriebsvorrichtung für die Einzugswalzen eines Feldhäckslers mit einer Einrichtung zum Schnellabschalten des Antriebes mittels einer Abschaltkupplung, die sowohl den Antriebsfluß unterbricht, als auch mittels eines Klinkengesperres oder dergleichen einen momentanen Stillstand des Antriebes bewirkt, dadurch gekennzeichnet, daß in den Antriebsstrang zwischen der Abschaltkupplung (26) und den Einzugswalzen (5, 6, 7, 8, 9) mindestens ein Antriebselement (24) eingeschaltet ist, das aufgrund seiner Gestaltung als Drehstabfeder (47, 48, 49) mit einem Dämpfungsglied oder als Rutschkupplung bei Schnellstop der Einzugswalzen (5, 6, 7, 8, 9) über die verbliebene kinetische Drehenergie noch um einen beachtlichen Drehwinkel verdrehbar ist, der in Verbindung mit der dämpfenden Wirkung des Dämpfungsgliedes oder der Rutschlupplung maßgebend für einen weichen Abbau der Stoßkräfte im Klinkengesperre und in den nachfolgenden Antriebselementen ist.

2. Antriebsvorrichtung nach Anspruch 1, dadurch gekennzeichnet, daß die dämpfende Wirkung des als Drehstabfeder (47, 48, 49) ausgebildeten Antriebselementes (24) durch Gummihülsenfedern (48) im Antriebselement (24) erreicht wird.

3. Antriebsvorrichtung nach Ansprüchen 1 und 2, dadurch gekennzeichnet, daß das Antriebselement (24) zwischen der Abschaltkupplung (26) und den oberen Einzugswalzen (8, 9) eingeschaltet ist.

## Claims

1. A drive apparatus for the draw-in rollers of a forage harvester having a device for rapid shut-down of the drive by means of a disconnect coupling means which both interrupts the drive flow and also produces instantaneous stoppage of the drive by means of a pawl lock or the like, characterised in that connected into the drive line between the disconnect coupling means (26) and the draw-in rollers (5, 6, 7, 8, 9) is at least one drive element (24) which by virtue of its being in the form of a torsion bar spring (47, 48, 49) with a damping member or in the form of a slipping clutch, is still rotatable in the event of a rapid stop of the draw-in rollers (5, 6, 7, 8, 9) by virtue of the kinetic rotational energy that has remained through a considerable rotational angle which in conjunction with the damping action of the damping member or the slipping clutch is decisive for gently reducing the shock forces in the pawl lock and in the subsequent drive elements.

2. A drive apparatus according to claim 1 characterised in that the damping action of the drive element (24) in the form of the torsion bar spring (47, 48, 49) is achieved by rubber sleeve springs (48) in the drive element (24).

3. A drive apparatus according to claims 1 and 2 characterised in that the drive element (24) is connected between the disconnect coupling means (26) and the upper draw-in rollers (8, 9).

## Revendications

1. Dispositif d'entraînement des rouleaux d'amenée d'une récolteuse-hacheuse, présentant un système de débrayage rapide de l'entraînement au moyen d'un accouplement de débrayage, qui provoque aussi bien une interruption du flux d'entraînement qu'un arrêt momentané de l'entraînement, au moyen d'un verrou à cliquet ou d'un système similaire, caractérisé par le fait qu'au moins un élément d'entraînement (24), intégré dans la branche d'entraînement entre l'accouplement de débrayage (26) et les rouleaux d'amenée (5, 6, 7, 8, 9), peut encore tourner lors d'un arrêt instantané des rouleaux d'amenée (5, 6, 7, 8, 9), sous l'action de l'énergie de rotation cinétique résiduelle, du fait de sa configuration en tant que ressort (47, 48, 49) à barre de torsion muni d'un organe amortisseur, ou en tant qu'accouplement patinant, d'un angle de rotation notable qui, en association avec l'effet d'amortissement de l'organe amortisseur ou de l'accouplement patinant, est déterminant pour la suppression en douceur des forces d'impact dans le verrou à cliquet et dans les éléments d'entraînement successifs.

2. Dispositif d'entraînement selon la revendication 1, caractérisé par le fait que l'effet d'amortissement de l'élément d'entraînement (24), réalisé sous la forme d'un ressort (47, 48, 49) à barre de torsion, est obtenu par des ressorts (48) à douilles de caoutchouc qui sont intégrés dans l'élément d'entraînement (24).

3. Dispositif d'entraînement selon les revendications 1 et 2, caractérisé par le fait que l'élément d'entraînement (24) est interposé entre l'accouplement de débrayage (26) et les rouleaux supérieurs d'amenée (8, 9).
